# EUROPEAN PATENT APPLICATION

(11) **EP 4 321 284 A1**
(43) Date of publication of application: **14.02.2024**
(21) Application number: 23189998.0
(22) Date of filing: 07.08.2023
(51) Int. Cl.: B23B 51/00, B23B 51/04

(54) **DRILL BIT WITH MULTI-STEPPED TIP**

(30) Priority: 10.08.2022 US 202263370963 P; 10.08.2022 US 202263370965 P; 04.08.2023 US 202318365289
(71) Applicant: Black & Decker, Inc., New Britain, CT 06053 (US)
(72) Inventor: GARCIA, Andre Dos Santos, 95185-000 Carlos Barbosa (BR); BARRO, Clederson, 95185-000 Carlos Barbosa (BR); PROBST, Florian, 94501 Aidenbach (DE); SANOGO, Poinon Z., Enfield, 06082 (US); PROULX, Jeffrey Charles, Wilbraham, 01095 (US); GREEN, Matthew Christopher, Amherst, 01002 (US); BRANDIN, Jackson Mead, West Springfield, 01089 (US); REIST, Andrew C., Springfield, 01128 (US); NOVAK, Joseph T., East Longmeadow, 01028 (US)
(74) Representative: SBD IPAdmin

(57) **Abstract**

A drill bit 10 / 110 / 210 includes a shank 28, an intermediate portion 34 with a helical flute 36, and a multi-stepped tip portion 38 extending along the axis. The tip portion includes a cutting tip 42 with a pair of primary cutting edges 44 extending radially outward from the axis, a plurality of steps 46a - 46d each having an elongated portion 50a - 50d and a tapered portion 52a - 52d tapered outward from the elongated portion relative to the axis. The elongated portions progressively increase in diameter from the cutting tip to the intermediate portion. The elongated portion of each step has an axial relief tapered inward toward the axis. A frontmost elongated portion has a first axial relief at a first angle relative to the central axis and a rearmost elongated portion has a second axial relief at a second angle greater than the first angle. The drill bit may be used as a pilot bit together with a holesaw 312 in a system 300.

## Description

### RELATED APPLICATION

This application claims priority, under 35 U.S.C. § 119(e) to U.S. Provisional Patent Application No. 63/370,963, filed August 10, 2022, titled "Holesaw with Pilot Drill Bit," and to U.S. Provisional Patent Application No. 63/370,965, filed August 10, 2022, titled "Drill Bit with Pilot Tip," each of which is incorporated by reference.

### TECHNICAL FIELD

The present application relates to a drill bit with a multi-stepped tip that may be used alone or as a pilot drill bit in conjunction with a holesaw to form holes in a workpiece.

### BACKGROUND

Many drill bits include a shank configured to be coupled to a tool holder of a power tool (such as a drill, a drill/driver, or an impact driver), an intermediate fluted portion extending forward of the shank with at least one helical flute, and a cutting tip coupled to a front end of the fluted section and having a split point or a pilot tip with a single step. An example of a drill bit with a pilot tip can be found, for example, in U.S. Patent No. 6,050,754, which is incorporated by reference. There is a need for improved drill bits, especially for forming holes in metal workpieces.

Holesaws may be used to form large diameter holes in a workpiece and generally have a circular base, a cylindrical wall extending forward of the base about a central axis, and cutting teeth arranged around a periphery of the front end of the cylindrical wall. The base can be coupled to an arbor, which can be coupled to an output tool holder of a rotary power tool, such as a drill, a drill/driver, or an impact driver. A drill bit may be received in the holesaw and/or arbor along the central axis and may extend axially forward of the front end of the cylindrical wall to facilitate drilling a pilot hole in the workpiece before the holesaw contacts the workpiece. When first making a cut with a holesaw, the pilot bit may require a large amount of axial force to pierce the workpiece. Once the pilot bit penetrates through the workpiece, the application of axial force may cause a holesaw to slam into the workpiece. This may jolt a user's hand, damage the teeth of the hole saw, the pilot bit, and workpiece. This also may cause the holesaw to walk from the center, mar the workpiece, and/or break or bend the pilot drill bit. There is a need for improved pilot drill bits, especially for forming holes in metal workpieces.

### SUMMARY

The present application relates to several embodiments drill bits with multi-stepped tips that may be used by themselves or may be used as pilot drill bits in conjunction with a holesaw to form holes in workpieces, especially in metal workpieces.

In an aspect, a drill bit includes a shank extending along the axis, an intermediate portion extending forward of the shank along the axis with a helical flute, and a multi-stepped tip portion coupled to a front end of the fluted portion. The multi-stepped tip portion includes a cutting tip with a pair of primary cutting edges extending radially outward from the axis, a plurality of steps each having an elongated portion and a tapered portion that is tapered outward from the elongated portion relative to the axis. The elongated portions progressively increase in diameter from the cutting tip to the intermediate portion, and a tip flute is in communication with the helical flute in the intermediate portion. The elongated portion of each step has an axial relief tapered inward toward the axis. A frontmost elongated portion of a frontmost step of the plurality of steps closest to the cutting tip has a first axial relief at a first angle relative to the central axis. A rearmost elongated portion of a rearmost step of the plurality of steps closest to the intermediate portion has a second axial relief tapered inward toward the central axis at a second angle relative to the central axis, the second angle greater than the first angle.

Implementations of this aspect may include one or more of the following features. The plurality of steps may include one or more intermediate steps between the frontmost step and the rearmost step. The elongated portion of each of the one or more intermediate steps may have an intermediate axial relief at an intermediate angle that is less than the second angle. The intermediate angle may be equal to the first angle. The first angle may be between 0.5° and 5°. The second angle may be between 8° and 12°. Each tapered portion may have a radial relief relative to the axis such that a leading edge of the tapered portion has a greater radius than a trailing edge of the tapered portion. The tip flute may be helical or may be parallel to the axis. Secondary cutting edges may be formed at junctions between each tapered portion and the tip flute. 10. The multi-stepped tip portion may have an axial length between 4 mm and 12 mm. The plurality of steps may comprise between two and four steps.

In another aspect, a holesaw system includes a holesaw and a pilot drill bit. The holesaw includes a base, a cylindrical blade portion extending forward of the base about a central axis, and a cutting edge at a front end of the blade portion. A pilot drill bit includes a shank extending along the axis, an intermediate fluted portion extending axially forward of the shank with a helical flute at a first helix angle relative to the axis, and a stepped tip portion coupled to a front end of the fluted portion. The stepped tip portion includes a pilot tip with a pair of primary cutting edges extending radially outward from the central axis, a plurality of steps each having an elongated portion and a tapered portion that is tapered outward from the elongated portion relative to the axis. The elongated portions progressively increase in diameter from the pilot tip to the intermediate portion, and a tip flute is in communication with the helical flute in the intermediate portion. The elongated portion of each step has an axial relief tapered inward toward the axis. A frontmost elongated portion of a frontmost step of the plurality of steps closest to the cutting tip has a first axial relief at a first angle relative to the central axis. A rearmost elongated portion of a rearmost step of the plurality of steps closest to the intermediate portion has a second axial relief tapered inward toward the central axis at a second angle relative to the central axis, the second angle greater than the first angle.

Implementations of this aspect may include one or more of the following features. The plurality of steps may include one or more intermediate steps between the frontmost step and the rearmost step. The elongated portion of each of the one or more intermediate steps may have an intermediate axial relief at an intermediate angle that is less than the second angle. The intermediate angle may be equal to the first angle. The first angle may be between 0.5° and 5°. The second angle may be between 8° and 12°. Each tapered portion may have a radial relief relative to the axis such that a leading edge of the tapered portion has a greater radius than a trailing edge of the tapered portion. The tip flute may be helical or may be parallel to the axis. An arbor may be coupleable to the holesaw, to the pilot drill bit, and to a rotary power tool. When assembled with the holesaw and the arbor, the multi-stepped tip may extend beyond a cutting edge of the holesaw.

Advantages may include one or more of the following. The multi-stepped cutting head with axial and radial reliefs on the steps, including a greater axial relief on the rearmost step, help the drill bit cut smoother, reduce the drill bit walking or getting stuck in a hole, help improve life and cutting speed of the drill bit and reduce the axial force required to be applied to the drill. When used as a pilot drill bit with a holesaw, the multi-stepped cutting head drill bit may reduce instances of a pilot dill bit suddenly pulling through a workpiece, inhibiting or preventing the holesaw slamming into the workpiece. This will reduce damage to the workpiece, the teeth of the holesaw, and may reduce jolting experienced by a user when cutting with a hole saw, and/or may alert the user that the initial pilot hole has been made so that they can reduce the axial force being applied to the drill. The multi-stepped pilot drill bit also may reduce instances of a holesaw contacting the workpiece in an uncontrolled manner such that some teeth grab the workpiece while the saw is still rotating, causing the holesaw to walk from center, mar the workpiece, and/or bend or break the pilot drill bit. These and other advantages and features will be apparent from the description and the drawings.

### BRIEF DESCRIPTION OF THE DRAWINGS

FIG. 1 is a side view of an existing drill bit.
FIG. 2A is a cross-sectional view of the intermediate portion of the drill bit of FIG. 1.
FIG. 2B is a cross-sectional view of the intermediate portion of the drill bit of FIG. 1.
FIG. 3 is a perspective view of a tip portion of the drill bit of FIG 1.
FIG. 4 is a side view of the tip of the drill bit of FIG. 1.
FIG. 5 is a side view of a first embodiment of a drill bit in accordance with this patent application.
FIG. 6A is a cross-sectional view of the intermediate portion of a first embodiment of the drill bit of FIG. 5.
FIG. 6B is a cross-sectional view of the intermediate portion of a second embodiment of the drill bit of FIG. 5.
FIG. 7 is a side view of a tip portion of the drill bit of FIG. 5.
FIG. 8 is a side view of the tip portion of the drill bit of FIG. 5, rotated by 90 degrees.
FIG. 9 is a front end view of the tip portion of the pilot bit of FIG. 5.
FIG. 10 is a perspective view of a tip portion of a second embodiment of a drill bit in accordance with this patent application.
FIG. 11 is a side view of the tip portion of the drill bit of FIG. 10.
FIG. 12 is a side view of a third embodiment of a drill bit in accordance with this patent application.
FIG. 13 is a side view of a tip portion of the drill bit of FIG. 12.
FIG. 14 is a side view of the tip portion of the drill bit of FIG. 12, rotated by 90 degrees.
FIG. 15 is a front end view of the tip portion of the pilot bit of FIG. 12.
FIGS. 16 and 17 are side views of a holesaw system in accordance with the present patent application.
FIGS. 18A-18C are illustrations of the results of life testing of drill bits in accordance with the present application.
FIGS. 19A-19C are illustrations of the results of cutting speed testing of drill bits in accordance with the present application.
FIGS. 20A-20B are illustrations of the results of life testing of drill bits in accordance with the present application.
FIGS. 21A-21B are illustrations of the results of cutting speed testing of drill bits in accordance with the present application.

### DETAILED DESCRIPTION

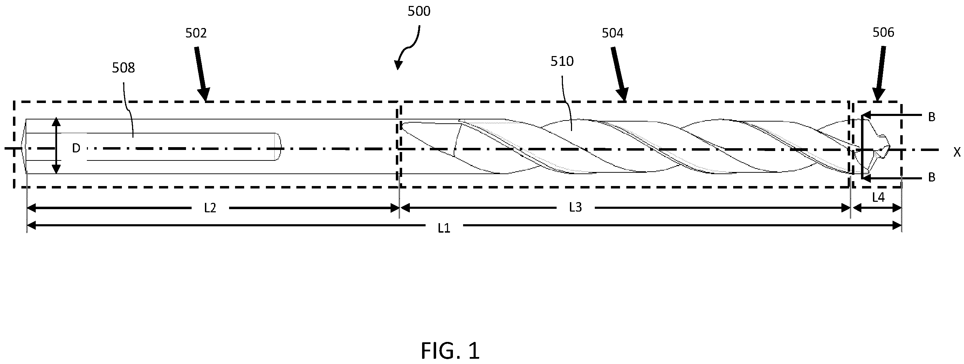

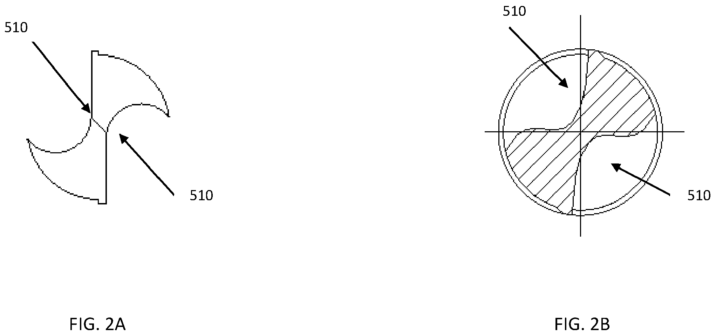

Referring to FIGS. 1-4, an existing drill bit 500 with a pilot tip has a first axial length L1 and includes a shank portion 502, an intermediate fluted portion 504 joined to a front end of the shank portion 502, and a pilot tip portion 506 joined to the front end of the intermediate portion 504, each extending along a central axis X. The shank portion 502 has a second axial length L2 and is generally cylindrical, optionally includes one or more flats 508, and is configured to be received in a tool holder (e.g., a chuck of quick release tool bit holder) of a rotary power tool (e.g., a drill, a drill/driver, or an impact driver). The intermediate fluted portion has a third axial length L3 and a diameter D and includes at least one helical first flute 510. In the illustrated embodiment, two flutes 510 are shown. Each first flute may have a N-type geometry that is J-shaped in cross section as shown in Fig. 2A. Alternatively, each first flute may have a parabolic geometry, as shown in Fig. 2B.

The pilot tip portion 506 has a fourth axial length L4 and includes a pair of primary cutting edges 512 extending radially outward and axially rearward from the central axis X at a first cutting angle α1 (e.g., approximately 59 to 68 degrees). The pilot tip portion also includes one or more second flutes 514 extend through the pilot tip and are in communication with the one or more flutes 510 in the intermediate portion 504. In the illustrated embodiment, the second flute is also helical. The second flute may have a helix angle that is the same as or different from the helix angle θ1 of the first flute on the intermediate portion. The tip flute may have a parabolic geometry or a N-type geometry.

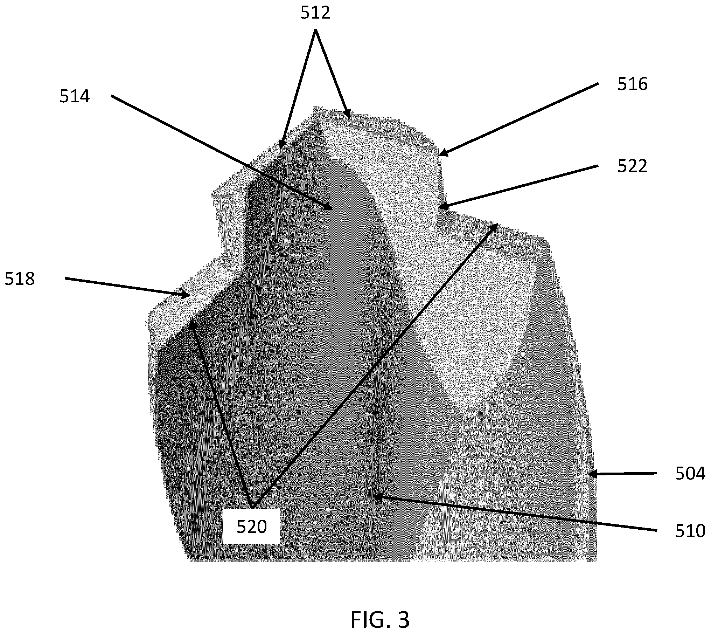

The pilot tip 506 also includes a generally cylindrical portion 516 with a first diameter d1 that is less than diameter D of the intermediate portion 504 and an outwardly tapered portion 518 that joins the pilot tip 506 with the intermediate portion 504. The tapered portion 518 includes a pair of secondary cutting edges 520 at junctions between the second flute 514 and the tapered portions 518. The secondary cutting edges 520 are disposed at a second acute angle α2 relative to the axis. The second acute angle α2 may be less than the first angle α1 (e.g., approximately 60 degrees) or may be approximately the same as the first acute angle (e.g., approximately 59 to 68 degrees). The cylindrical portion has an axial length c1 and the tapered portion has an axial length t1 that is less than the axial length c1 of the cylindrical portion. The cylindrical portion may include an inward axial relief 522 (e.g., shown in Fig. 3) extending in a rearward direction so that a front portion of the cylindrical portion has a larger diameter than a rearward portion of the cylindrical portion.

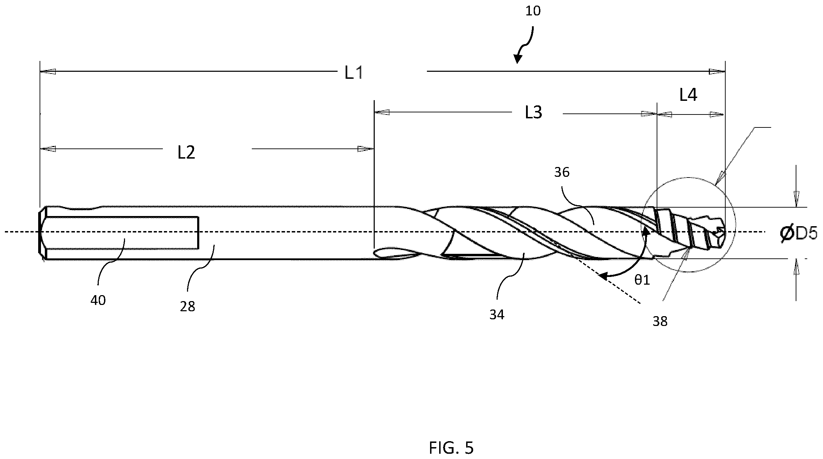

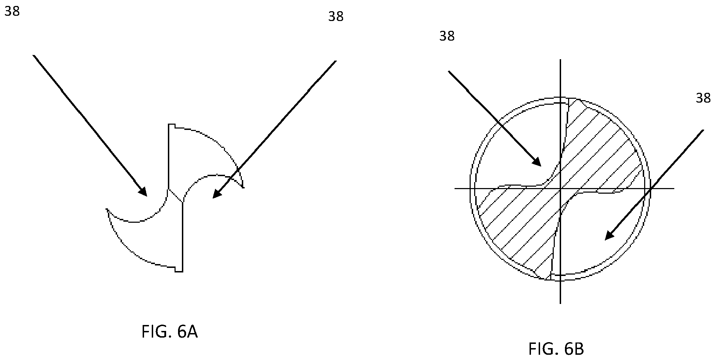

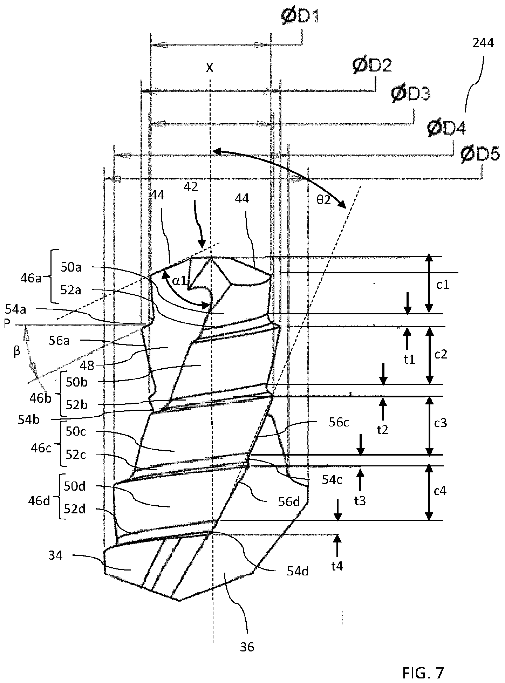

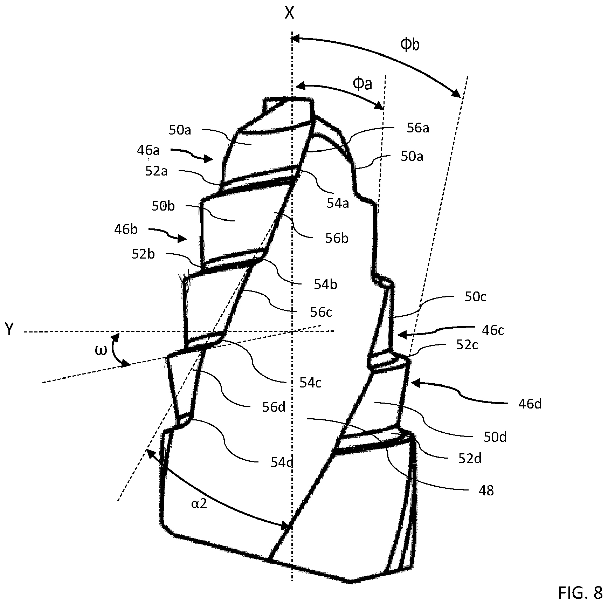

Referring to FIGS. 5-9, a first exemplary embodiment of a drill bit 10 in accordance with the present patent application has a first axial length L1 (e.g., approximately 80 mm to 100 mm) and includes the shank portion 28, an intermediate fluted portion 34 with a helical flute 36 joined to a front end of the shank portion 28, and a multi-stepped tip portion 38 joined to the front end of the intermediate portion 34, each extending along the central axis X. The shank portion 28 has a second axial length L2 (e.g., approximately 40 mm to 50 mm) and is axially elongated with one or more optional flats 40. The intermediate fluted portion 36 has a third axial length L3 (e.g., approximately 30 mm to 40 mm) and a diameter D5, which corresponds to the diameter of a hole to be formed by the drill bit (e.g., approximately ¼" to approximately ½") and includes the at least one helical flute 38 having a helix angle θ1 (e.g., approximately 15° to 35°). In the illustrated embodiment, two flutes are shown. Each flute may have a standard N-type geometry that are J-shaped in cross section as shown in Fig. 6A or may be parabolic as shown in Fig. 6B.

The multi-stepped tip portion 38 has a fourth axial length L4 (e.g., approximately 4 mm to 12 mm) and includes a cutting tip 42 with a pair of primary cutting edges 44 extending radially outward and axially rearward from the central axis X at a first cutting angle α1 (e.g., approximately 60 to 75 degrees, such as 59 to 68 degrees) relative to the central axis X. The stepped tip portion 42 also includes a plurality of steps 46a, 46b, 46c, 46d (e.g., four steps) of progressively increasing diameter from the pilot tip to the intermediate portion. One or more flutes 48 (e.g., two flutes) extend through the steps and are in communication with the flute(s) 36 in the intermediate portion 34. In the illustrated embodiment, the tip flute is also helical. The tip flute may have a helix angle θ2 (e.g., approximately 15° to 35°) that may be the same as or different from the helix angle θ1 of the helical flute on the intermediate portion.

Each step 46a, 46b, 46c, 46d includes an axially elongated portion 50a, 50b, 50c, 50d and a tapered portion 52a, 52b, 52c, 52d that is angled at a taper angle β relative to a plane P perpendicular to the central axis X (e.g., approximately 5° to 60°). The first step 50a includes the pilot tip 42 with a pair of radial minor cutting edges disposed at an angle (relative to the rotational axis of the drill bit). Each tapered portion 52a-52d defines a secondary cutting edge 54a-54d at a junction between the flute and the tapered portion 52a-52d. The secondary cutting edges may all have the same second cutting edge angle α2 (e.g., approximately 5 to 35 degrees, such as 45 degrees), which may be smaller than the first cutting edge angle α1, relative to the rotational axis X. In other embodiments, the second cutting angle may be different in different steps. Each axially elongated portion 50a-50d optionally may define a tertiary cutting edge 56a-56d at a junction between the flute 48 and the axially elongated portion 50a-50c. Each axially elongated portion 50a-50d has an axial length c1, c2, c3, c4, which may be the same as or different from one another. In some embodiments, the steps may be arranged in a helical fashion so that their top edges are at an angle ω relative to a line Y perpendicular to the central axis X.

Each tapered portion 52a-52d has an axial length t1, t2, t3, t4 that is less than the length of the adjacent axially elongated portion. The lengths may be selected so that when drilling into a common workpiece, such as a metal sheet or plate, only one or two of the steps are in contact with the workpiece at any one time as the hole is being formed. This helps avoid the drill bit walking around the workpiece (which could occur if too few steps are in contact with the workpiece) or getting stuck in the workpiece (which could occur if too many steps are in contact with the workpiece). To this end, in one embodiment, the overall axial length of the multi-stepped tip may be between 4 mm and 12 mm and may have between two and four steps. Approximate exemplary values for the axial lengths for each of the axially elongated portions and tapered portions are given in the following table:

| Dimension | Approx. Axial length (mm) |
|---|---|
| c1 | 1.65 to 2.5 |
| c2 | 1.8 to 2.5 |
| c3 | 1.8 to 2.5 |
| c4 | 1.8 to 2.5 |
| t1 | 0.13 to 0.70 |
| t2 | 0.15 to 0.70 |
| t3 | 0.15 to 0.70 |
| t4 | 0.15 to 0.70 |

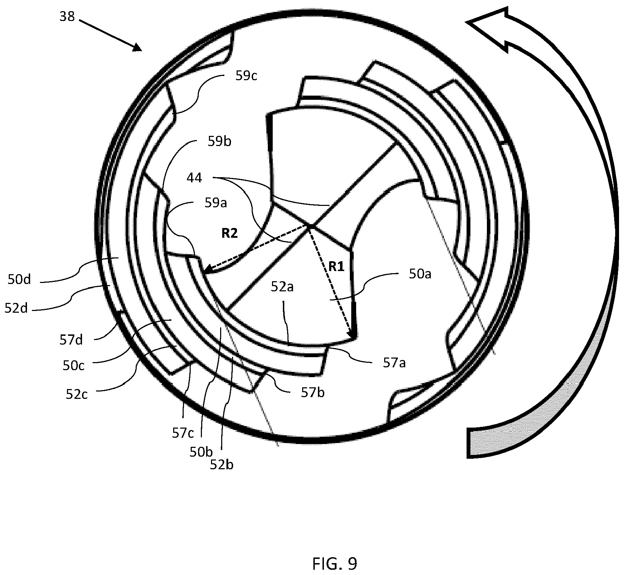

Each of the axially elongated portions 50a, 50b, 50c of the steps 46a, 46b, 46c, other than the rearmost elongated portion 50d of the rearmost step 46d, includes a small inward axial relief, where the inner axially elongated portion tapers radially inward toward the rear end of the drill bit by a small angle Φa (e.g., between 0.5° and 5°) relative to the central axis X. Each of the small axial relief angles Φa may be the same or different, and in some embodiments, the angle of the small axial relief may increase from the first step to the last step. The rearmost axially elongated portion 50d of the rearmost step 46d has a greater relief angle Φb (e.g., 8° to 15°, such as 10°) than each of the other steps. As shown in FIG. 9, each of the tapered portions 50a, 50b, 50c, 50d also have a radial relief such that each of their leading edges 57a, 57b, 57c, 57d (with cutting edges 54a, 54b, 54c, 54d) is disposed at a first radius R1 relative to the central axis X that is greater than a second radius R2 at which each of their trailing edges 59a, 59b, 59c, 59d are relative to the central axis X. The axial and radial reliefs on the steps, including the greater axial relief on the rearmost step, help the drill bit cut smoother, reduce the drill bit getting stuck in the hole, and help improve life and cutting speed of the drill bit.

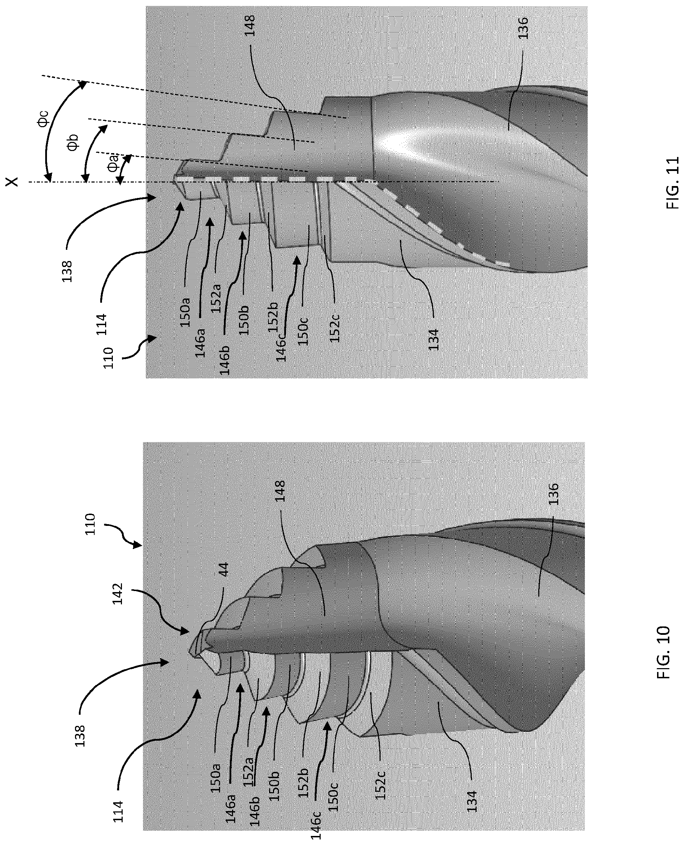

Referring to FIGS. 10 and 11, another exemplary embodiment of a drill bit 110 is substantially similar to the pilot drill bit 10 shown in FIGS. 5-9, except for the following differences. First, the drill bit 114 has a multi-stepped tip portion 138 that has only three steps 146a, 146b, 146c (each having an axially elongated portion 150a, 150b, 150c and a tapered portion 152a, 152b, 152c, similar to the elongated portions 50a, 50b, 50c, 50d and the tapered portions 52a, 52b, 52c, 52d of the drill bit 10 described above). Second, the first axially elongated portion 150a, 150b each have an axial relief at a small relief angle Φa, Φb, e.g., approximately 0.5° to 5° (which may be the same as or different from one another) and the rearmost axially elongated portion 150c has an axial relied with a larger relief angle Φc, e.g., approximately 8° to 12°, such as 10°. Third, the multi-stepped tip portion 138 may have a flute 148 that is generally straight and parallel to the axis X and that is in communication with a spiral flute 136 on the intermediate portion 134 of the pilot drill bit 114.

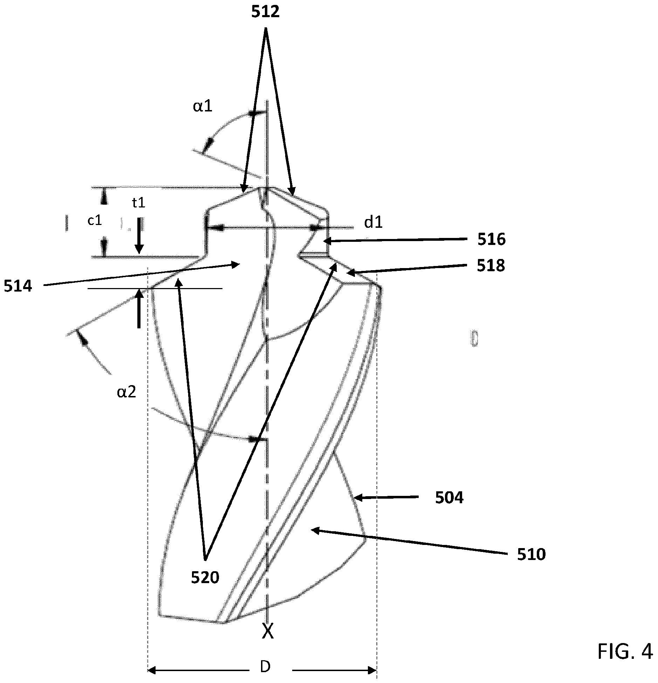

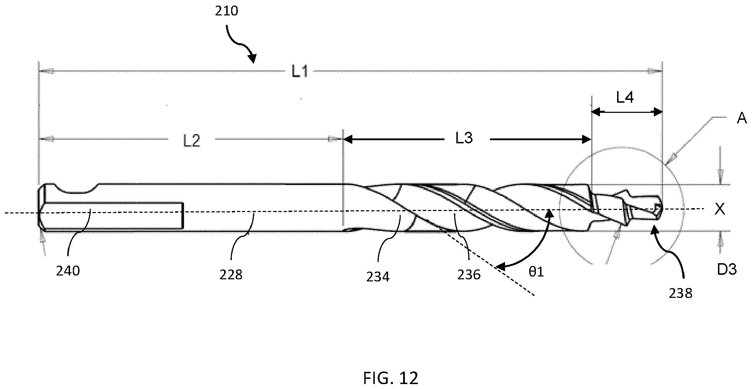

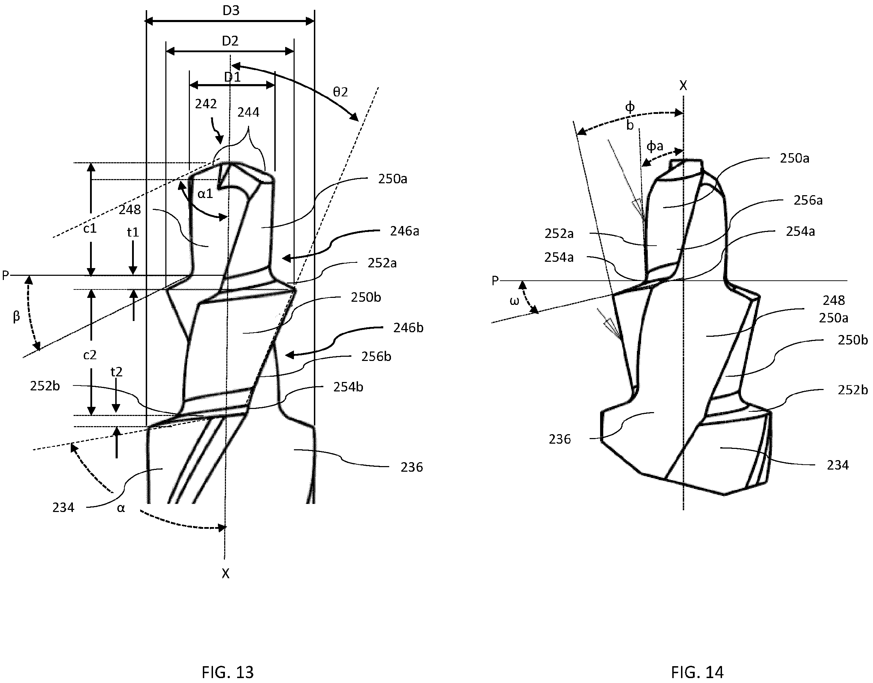

Referring to FIGS. 12-15, in another embodiment, another exemplary embodiment of a drill bit 210 in accordance with the present patent application is substantially similar to the pilot drill bit 10 shown in FIGS. 5-9, except that it has two steps in a multi-stepped tip portion. The drill bit 210 has a first axial length L1 (e.g., approximately 70 mm to 160 mm) and includes a shank portion 228, an intermediate fluted portion 234 with a helical flute 236 joined to a front end of the shank portion 228, and a stepped tip portion 238 joined to the front end of the intermediate portion 234, each extending along the central axis X. The shank portion 228 has a second axial length L2 (e.g., approximately 40 mm to 50 mm) and is axially elongated with one or more optional flats 240. The intermediate fluted portion 236 has a third axial length L3 (e.g., approximately 20 mm to 100 mm) and a diameter D3 (e.g., approximately ¼" to ½") and includes the at least one helical flute 328. In the illustrated embodiment, two flutes are shown. Each flute may have a N-type geometry that are J-shaped in cross section as shown in Fig. 4A or may have a parabolic geometry as shown in FIG. 4B.

The stepped tip portion 238 has a fourth axial length L4 (e.g., approximately 4 mm to 12 mm) and includes a pilot tip 242 with a pair of primary cutting edges 244 extending radially outward and axially rearward from the central axis X at a first cutting angle α1 (e.g., approximately 59 to 68 degrees) relative to the central axis X. The stepped tip portion 242 also includes two steps 246a, 246b of progressively increasing diameter from the pilot tip to the intermediate portion. One or more tip flutes 248 (e.g., two flutes) extend through the steps and are in communication with the one or more flutes 236 in the intermediate portion 234. In the illustrated embodiment, the tip flute 248 is also helical. The tip flute 248 tip flute may have a helix angle θ2 (e.g., approximately 15° to 35°) that may be the same as or different from the helix angle θ1 of the helical flute on the intermediate portion.

Each step 246a, 246b, includes an axially elongated portion 250a, 250b and a tapered portion 252a, 252b that is angled at a taper angle β relative to a plane P perpendicular to the central axis X (e.g., approximately 5° to 60°). Each tapered portion 252a, 252b defines a secondary cutting edge 254a, 254b at a junction between the flute 248 and the tapered portion 252a, 252b. The secondary cutting edges 254a, 254b each have a cutting edge angle α relative to the central axis X (e.g., approximately 5 to 60 degrees, such as 45 degrees), which may be the same as or different from each other. Each axially elongated portion 250a, 250b optionally may define a tertiary cutting edge 256a, 256b, at a junction between the tip flute 248 and the axially elongated portion 250a, 250b. In some embodiments, the steps may be arranged in a helical fashion so that their top edges are at an angle ω relative to a line Y perpendicular to the central axis X.

Each axially elongated portion 250a, 250b has an axial length c1, c2, which may be the same as or different from one another. Each tapered portion 252a, 252b has an axial length t1, t2 that is less than the length of the adjacent axially elongated portion. The lengths may be selected so that when drilling into a common workpiece, such as a metal sheet or plate, two of the steps are in contact with the workpiece as the hole is being formed. This helps avoid the drill bit walking around the workpiece (which could occur if too few steps are in contact with the workpiece) or getting stuck in the workpiece (which could occur if too many steps are in contact with the workpiece). Approximate exemplary values for the axial lengths for each of the axially elongated portions and tapered portions are given in the following table:

| Dimension | Axial length (mm) |
|---|---|
| c1 | 1 to 5 |
| c2 | 1 to 5 |
| t1 | 0.15 to 0.70 |
| t2 | 0.15 to 0.70 |

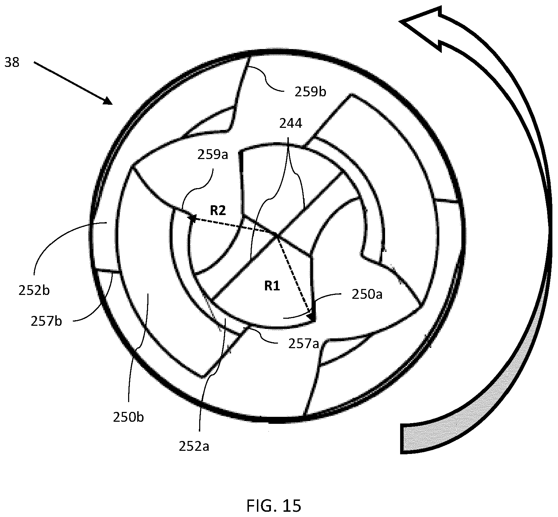

In an embodiment, the frontmost axially elongated portion 250a of the frontmost step 246a includes a small inward axial relief, where the inner axially elongated portion tapers radially inward toward the rear end of the drill bit by a small angle Φa (e.g., between 0.5° and 5°) relative to the central axis X. The rearmost axially elongated portion 250b of the rearmost step 246b has a greater relief angle Φb (e.g., 8° to 15°, such as 10°). As shown in FIG. 15, each of the tapered portions 252a, 252b also has a radial relief such that each of their leading edges 257a, 257b (with cutting edges 254a, 254b) is disposed at a first radius R1 relative to the central axis X that is greater than a second radius R2 at which each of their trailing edges 259a, 259b are relative to the central axis X. The axial and radial reliefs on the steps, including the greater axial relief on the rearmost step, help the drill bit cut smoother, reduce the drill bit getting stuck in the hole, and help improve life and cutting speed of the drill bit.

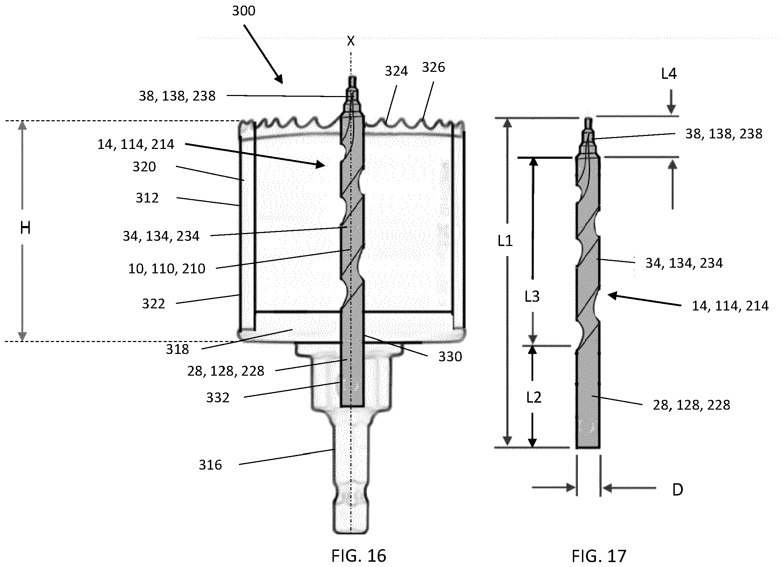

The above described drill bits 10, 110, 210 may be used by themselves, e.g., for forming holes in metal workpieces, or may be used as a pilot bit as part of a holesaw system. Referring also to FIGS. 16 and 17, an exemplary holesaw system 300 includes a holesaw 312 and an arbor 316 to which the holesaw 312 may be removably or permanently attached, and which is configured to be received in a tool holder (e.g., a chuck or quick release tool bit holder) of a rotary power tool (not shown), such as a drill, a drill/driver, or an impact driver. The holesaw 312 has a height H and includes a generally circular base 318, a generally cylindrical blade portion 320 with a generally cylindrical wall 322 extending forward of the base 318 about a central axis X, and a cutting edge 324 with a plurality of cutting teeth 326 at a front end of the blade portion 320.

One of the above-described drill bits 10, 110, 210 may be received in the holesaw 312 along the central axis X. Although only one of the drill bits 10, 110, 210 is illustrated, it should be understood that any of the drill bits 10, 110, 210, or other drill bits that are within the scope of this application may be used with the holesaw system. The shank portion 28, 128, 228 may be configured to be received in a central opening 330 in the base of the holesaw 312 and in a central opening 332 in the arbor 316 so that it is configured to be coupled to the arbor 16. Alternatively, the pilot bit 10, 110, 210 may be formed integrally with the arbor 16, or the arbor 16 may be omitted with the pilot bit 10, 110, 210 received directly in a tool holder of a power tool.

When used with a holesaw, the lengths L1, L2, L3, and L4 of the drill bits 10, 110, 210 are selected such that an entirety of the multi-stepped tip portion 38, 138, 238 extends axially forward of the cutting edge 324 of the holesaw 312 and only a small portion or no portion of the intermediate portion 34, 134, 234 extends axially forward of the of the cutting edge 324 of the holesaw 312 when the drill bit is received in the arbor. In one possible example, L1 is approximately L1 80 mm to 100 mm, L2 is approximately 40 mm to 50 mm, L3 is approximately 30 mm to 40 mm, and L4 is approximately 4 mm to 12 mm.

When used with a holesaw, the progressively increasing diameters of multiple steps on the tip portion, each having an axial clearance (with the largest axial clearance in the rearmost step portion) and a radial clearance reduce instances of the pilot bit suddenly pulling through a workpiece. The pilot drill bit may reduce instances of the pilot bit suddenly pulling through a workpiece. The pilot drill bit also may help inhibit or prevent the holesaw slamming into the workpiece, reduce damage to the workpiece, the teeth, and/or the holesaw, may reduce jolting experienced by a user when cutting with a hole saw, and/or may alert the user that the initial pilot hole has been made so that they can reduce the axial force being applied to the drill. The stepped pilot drill bit also may reduce instances of a holesaw contacting the workpiece in an uncontrolled manner such that some teeth grab the workpiece while the saw is still rotating, causing the holesaw to walk from center, mar the workpiece, and/or bend or break the pilot drill bit. The inwardly tapered axial relief on the last or rearmost step adjacent the cutting edge of the holesaw may inhibit the drill bit from becoming stuck in the workpiece.

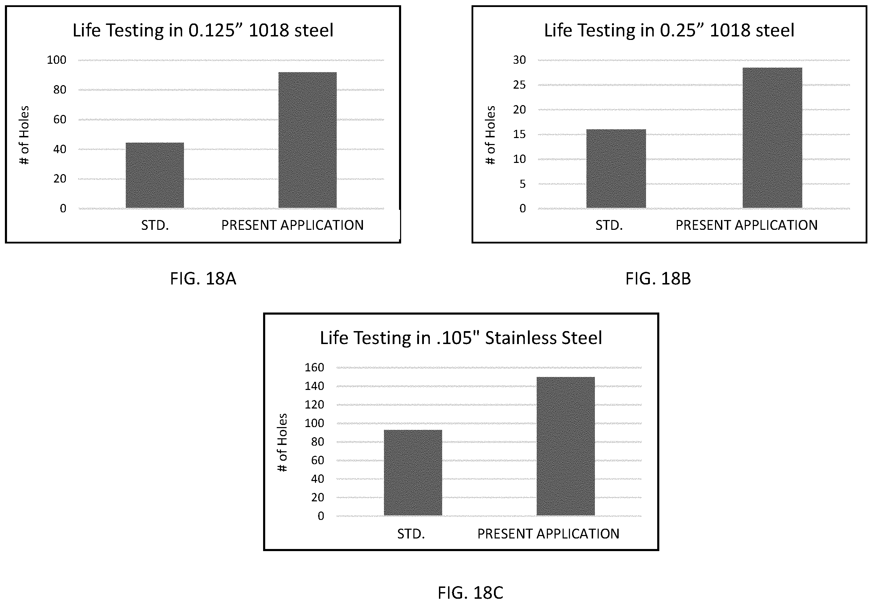

The drill bits described above also provide for dramatic improvements in both cutting speed and life when being used alone or in combination with a holesaw to form holes in metal workpieces. For example, in one test, drill bits with multi-stepped heads of the present application were compared to standard drill bits with a single stepped pilot tip, such as the drill bits shown in FIGS. 1-4. As shown in FIGS. 18A-18C, drill bits similar to those illustrated in FIGS. 5-9 were compared to a standard pilot tip drill bit in a life test. In this life test, the drill bit is mounted in a power tool, and is used in a rig to drill holes in specified workpiece using a specified drilling speed and axial biasing force. The drill bit is said to reach its end of life when it is not capable of drilling more holes in a determined period of time. The drill bits with multi-stepped heads of the present application showed an improvement in life of greater than 100% when drilling into 0.125" thick 1018 steel, an improvement in life of approximately 81% when drilling into 0.25" thick 1018 steel, an improvement in life of approximately 67% when drilling into 0.105" thick stainless steel.

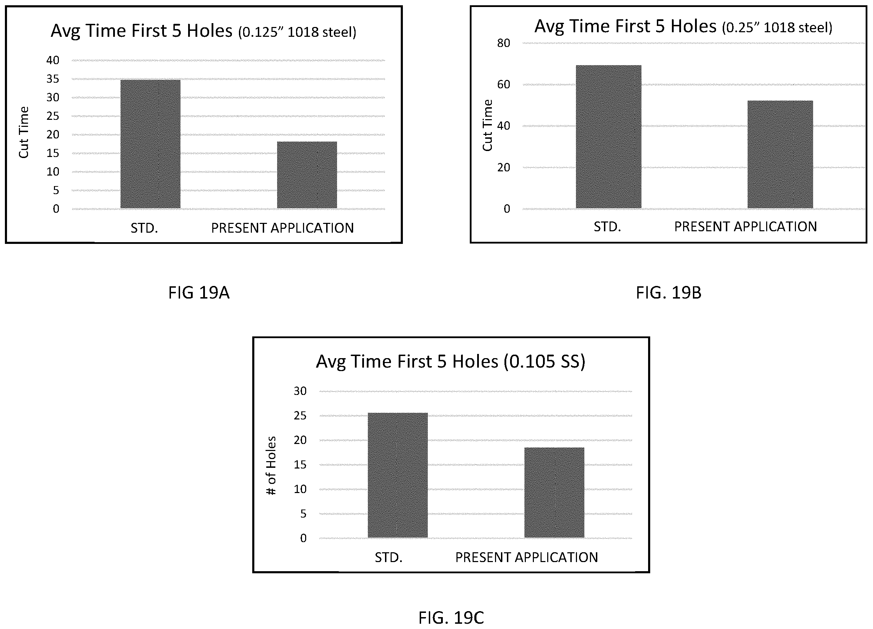

In another test, the same drill bits with multi-stepped heads of the present application were compared to standard drill bis with a single stepped pilot tip in a cutting speed test. In this speed test, the drill bit is mounted in a power tool and is used in a rig to drill holes in specified workpiece using a specified drilling speed and axial biasing force. The speed is measured as the average time to form the first 5 holes, with a lower time indicating a faster cutting speed. As shown in FIGS. 19A-19B, the drill bits with multi-stepped heads of the present application had an improvement in cutting speed of approximately 95% when drilling into 0.125" thick 1018 steel, an improvement in cutting speed of approximately 40% when drilling into 0.25" thick 1018 steel, an improvement in life of approximately 45% when drilling into 0.105" thick stainless steel.

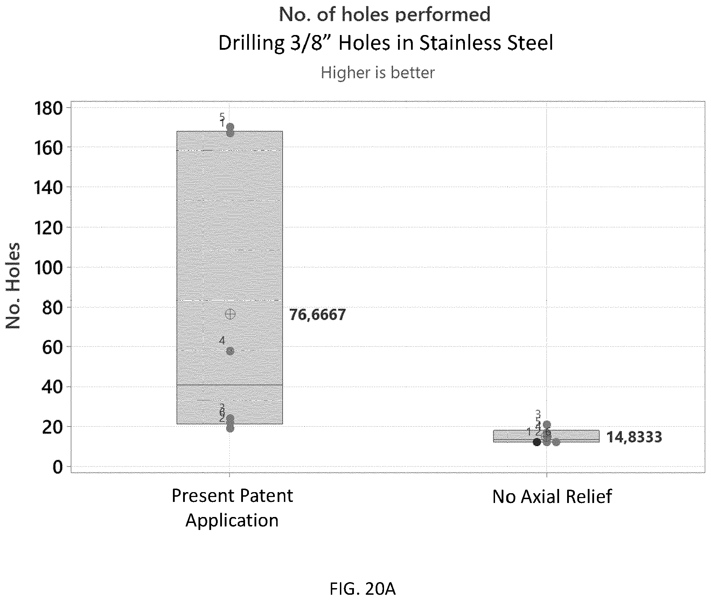

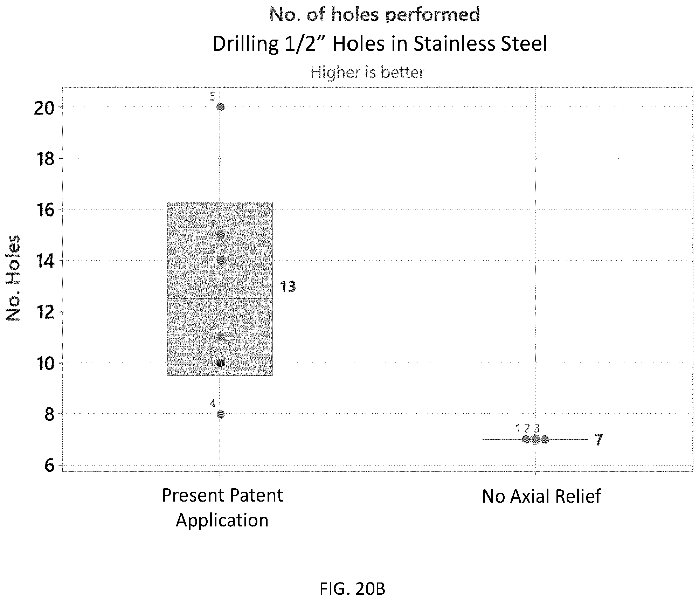

In another test, the drill bits with multi-stepped heads of the present application were compared against known drill bits that have multi-stepped heads but which lack axial reliefs in each step, such as those described in U.S. Patent No. 11,007,583 (which is incorporated by reference). In this life test, the drill bit is mounted in a power tool, and is used in a rig to drill holes in specified workpiece using a specified drilling speed and axial biasing force. The drill bit is said to reach its end of life when it is not capable of drilling more holes in a determined period of time. As shown in FIGS. 20A 20B, the drill bits of the present application showed 413% improvement in life when drilling 3/8" holes in stainless steel and an 86% improvement in life when drilling ½" holes in stainless steel.

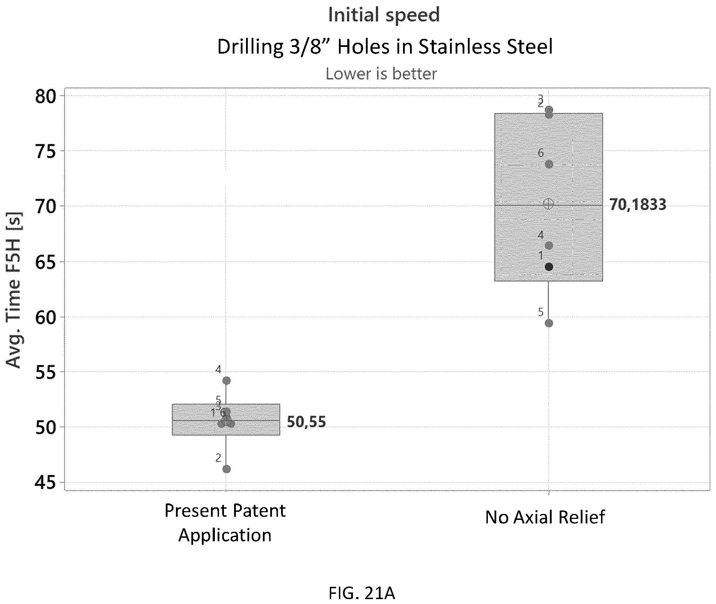

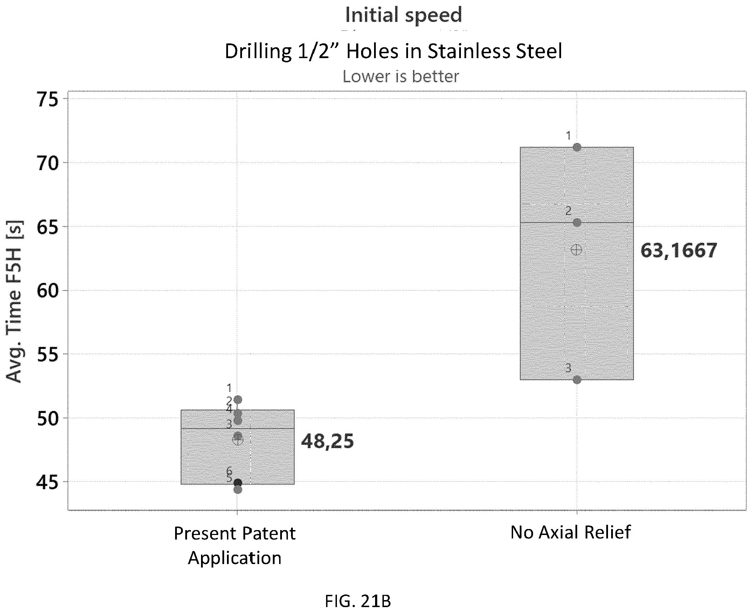

In another test, the drill bits with multi-stepped heads of the present application were compared against drill bits having multi-stepped heads but which lack axial reliefs in each step, such as those described in U.S. Patent No. 11,007,583. In this speed test, the drill bit is mounted in a power tool and is used in a rig to drill holes in specified workpiece using a specified drilling speed and axial biasing force. The speed is measured as the average time to form the first 5 holes, with a lower time indicating a faster cutting speed. As shown in FIGS. 21A-21B, the drill bits with multi-stepped heads of the present application had an improvement in cutting speed of approximately 29% when drilling 3/8" holes in stainless steel and a 24% improvement in when drilling ½" holes in stainless steel.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

Numerous modifications may be made to the exemplary implementations described above. These and other implementations are within the scope of this application.

## Claims

1. A drill bit comprising:
a shank extending along the axis;
an intermediate portion extending forward of the shank along the axis with a helical flute; and
a multi-stepped tip portion coupled to a front end of the fluted portion, the multi-stepped tip portion including a cutting tip with a pair of primary cutting edges extending radially outward from the axis, a plurality of steps each having an elongated portion and a tapered portion that is tapered outward from the elongated portion relative to the axis, the elongated portions progressively increasing in diameter from the cutting tip to the intermediate portion, and a tip flute in communication with the helical flute in the intermediate portion,
wherein the elongated portion of each step has an axial relief tapered inward toward the axis,
wherein a frontmost elongated portion of a frontmost step of the plurality of steps closest to the cutting tip has a first axial relief at a first angle relative to the central axis, and
wherein a rearmost elongated portion of a rearmost step of the plurality of steps closest to the intermediate portion has a second axial relief tapered inward toward the central axis at a second angle relative to the central axis, the second angle greater than the first angle.

2. The drill bit of claim 1, wherein the plurality of steps includes one or more intermediate steps between the frontmost step and the rearmost step.

3. The drill bit of claim 2, wherein the elongated portion of each of the one or more intermediate steps has an intermediate axial relief at an intermediate angle that is less than the second angle.

4. The drill bit of claim 3, wherein the intermediate angle is equal to the first angle.

5. The drill bit of any preceding claim, further comprising a secondary cutting edge formed at junctions between each tapered portion and the tip flute.

6. The drill bit of any preceding claim, wherein the multi-stepped tip portion has an axial length between 4 mm and 12 mm and the plurality of steps comprise between two and four steps.

7. A holesaw system comprising:
a holesaw including a base, a cylindrical blade portion extending forward of the base about a central axis, and a cutting edge at a front end of the blade portion; and
a pilot drill bit including a shank extending along the axis, an intermediate fluted portion extending axially forward of the shank with a helical flute at a first helix angle relative t the axis, and a stepped tip portion coupled to a front end of the fluted portion, the stepped tip portion including a pilot tip with a pair of primary cutting edges extending radially outward from the central axis, a plurality of steps each having an elongated portion and a tapered portion that is tapered outward from the elongated portion relative to the axis, the elongated portions progressively increasing in diameter from the pilot tip to the intermediate portion, and a tip flute in communication with the helical flute in the intermediate portion,
wherein the elongated portion of each step has an axial relief tapered inward toward the axis,
wherein a frontmost elongated portion of a frontmost step of the plurality of steps closest to the cutting tip has a first axial relief at a first angle relative to the central axis, and
wherein a rearmost elongated portion of a rearmost step of the plurality of steps closest to the intermediate portion has a second axial relief tapered inward toward the central axis at a second angle relative to the central axis, the second angle greater than the first angle.

8. The holesaw system of claim 7, wherein the plurality of steps includes one or more intermediate steps between the frontmost step and the rearmost step.

9. The holesaw system of claim 8, wherein the elongated portion of each of the one or more intermediate steps has an intermediate axial relief at an intermediate angle that is less than the second angle.

10. The holesaw system of claim 9, wherein the intermediate angle is equal to the first angle.

11. The drill bit or holesaw system of any preceding claim, wherein the first angle is between 0.5° and 5°.

12. The drill bit or holesaw system of any preceding claim, wherein the second angle is between 8° and 12°.

13. The drill bit or holesaw system of any preceding claim, wherein each tapered portion has a radial relief relative to the axis such that a leading edge of the tapered portion has a greater radius than a trailing edge of the tapered portion.

14. The drill bit or holesaw system of any preceding claim, wherein the tip flute is helical or is parallel to the axis.

15. The holesaw system of any of claims 7 to 14, further comprising an arbor that is coupleable to the holesaw, to the pilot drill bit, and to a rotary power tool.

16. The holesaw system of any of claims 7 to 15, wherein, when assembled with the holesaw and the arbor, the multi-stepped tip extends beyond a cutting edge of the holesaw.
